Europäisches Patentamt

European Patent Office

Office européen des brevets

(11) Veröffentlichungsnummer: **0 268 059**
**A1**

## (12) EUROPÄISCHE PATENTANMELDUNG

(21) Anmeldenummer: 87114643.7

(22) Anmeldetag: 07.10.87

(51) Int. Cl.⁴: **F23J 7/00** , B65G 53/18

(30) Priorität: 22.10.86 DE 3635825
03.04.87 DE 3711323

(43) Veröffentlichungstag der Anmeldung:
25.05.88 Patentblatt 88/21

(84) Benannte Vertragsstaaten:
BE DE FR

(71) Anmelder: **Johannes Möller Hamburg GmbH & Co. KG**
**Schillerstrasse 43**
**D-2000 Hamburg 50(DE)**

(72) Erfinder: **Möller, Hermann, Dr. Ing.**
**Klövensteenweg 68**
**D-2000 Hamburg 56(DE)**

(74) Vertreter: **Minetti, Ralf, Dipl.-Ing.**
**Ballindamm 15**
**D-2000 Hamburg 1(DE)**

(54) **Verfahren und Anordnung zum pneumatischen Fördern von feinkörnigen Feststoffen in den Feuerraum eines Kessels.**

(57) Um Rauchgase einer Feuerungsanlage zu entschwefeln ist es zweckmäßig, die Anlage mit einer Einrichtung zu versehen, die das Einblasen von additiven in den Feurraum eines Kessels ermöglicht. Die pneumatische Förderung derartiger Stoffe ist jedoch problemetisch, da sie zur Ausbildung von Ansätzen in der Förderleitung führen können und damit zu einer Verstopfung. Dem läßt sich abhelfen durch eine Steigerung der Geschwindigkeit des Fördergutes im Bereich des Austritts der Förderleitung. Dafür sieht die Erfindung vor, daß im Bereich der Kesselwand zusätzliche Luft durch eine poröse Förderrandwandung (6) dem Fördergutstrom zugeführt wird, wobei der Fördergutstrom vorzugsweise durch eine Düse (13) beschleunigt wird, die an der Mündung der Förderleitung (6) angeordnet ist. Dafür kann die Förderleitung mit der Kesselwand (4) durch ein Doppelmantelrohr (5) verbunden sein, dessen Innenrohr (6) luftdurchlässig ausgebildet ist, wobei das Außenrohr (7) mit einem Anschluß (9) für eine Luftzufuhr versehen ist, und das Innenrohr (6) sich konisch verjüngend (13) ausgebildet ist.

Fig. 3

# Verfahren und Anordnung zum pneumatischen Fördern von feinkörnigen Feststoffen in den Feuerraum eines Kessels

Die Erfindung betrifft ein Verfahren und eine Anordnung zum pneumatischen Fördern von feinkörnigen Feststoffen, wie Additiven für eine Entschwefelung von Rauchgasen, in den Feuerraum eines Kessels.

Um Rauchgase einer Feuerungsanlage zu entschwefeln, ist es notwendig, die Anlage mit einer Einrichtung zu versehen, die das Einblasen von Additiven in die Feuerungsräume ermöglicht. Bei derartigen Additiven handelt es sich um feinkörnige Stoffe insbesondere auf Kalk-und Magnesiumbasis wie Calziumoxyd, Calziumhydroxyd, Magnesiumoxyd und dergleichen. Die pneumatische Förderung derartiger feinkörniger Stoffe ist jedoch problematisch, da sie in hohem Maße zur Ausbildung von Ansätzen bzw. zu einem Anbacken in den Förderleitungen führen, so daß diese verhältnismäßig schnell verstopfen. Um dem abzuhelfen, ist man dazu übergegangen, Förderleitungen zu verwenden, die aus einem Förderrohr bestehen, in dem eine elastische, - schlauchförmige Förderleitung angeordnet ist (DT-PS 12 65 041 und 26 00 546). Bei diesen Leitungen ist es möglich, durch Einführung eines Druckmediums in den Zwischenraum zwischen Rohr und Schlauch oder durch Veränderung des Innendruckes in dem Schlauch seinen Querschnitt zu verändern und dadurch haftende Gutansätze abzulösen. Derartige bekannte Förderleitungen sind jedoch nicht geeignet für den Anschluß an den Kessel eines Feuerraumes zum Zwecke der Zufuhr von Additiven, da die für einen elastischen Schlauch zu verwendenden Werkstoffe den hohen Temperaturen im Bereich der Kesselwand nicht standhalten. Es ist deshalb bereits vorgeschlagen worden, die Förderleitungen im Bereich der Kesselwand auf ihrer Innenseite mit einer polierten Oberfläche zu versehen, um dadurch das Anhaften von feinkörnigen Feststoffen zu verhindern. Die Praxis hat jedoch gezeigt, daß sich auch auf sehr glatten Oberflächen bei verschiedenen Additiven Haftschichten aufbauen, die bei fortschreitendem Betrieb den Förderquerschnitt soweit verengen, daß die Anlage nicht funktionsfähig bleibt. Dies ist insbesondere dann der Fall, wenn eine hohe Austrittsgeschwindigkeit des Gemisches aus Additiven und Luft aus der Förderleitung in den Feuerraum vorgegeben wird, um dadurch den Ablauf des Verfahrens der Entschwefelung der Rauchgase zu unterstützen. Für hohe Fördergeschwindigkeiten sind aber auch Förderleitungen mit einem innenliegenden flexiblen Schlauch oder einer andersartigen elastischen Auskleidung wenig geeignet, weil sie einer hohen Beanspruchung ausgesetzt werden.

Aufgabe der Erfindung ist es, ein Verfahren und eine Anordnung für die Anwendung des Verfahrens zu schaffen, durch die einerseits die Fördergeschwindigkeit des Fördergutes im Bereich des Austritts aus der Förderleitung gesteigert wird und andererseits die Gefahr der Bildung von Ansätzen von Festgutteilchen in der Förderleitung und damit deren Verstopfung vermindert wird. Gemäß der Erfindung ist dafür vorgesehen, daß im Bereich der Kesselwand Luft durch eine poröse bzw. luftdurchlässige Förderrohrwandung dem Fördergutstrom zugeführt wird. Da durch eine derartige zusätzliche Zuführung von Luft in den Fördergutstrom bzw. das Gemisch aus Additiven und Förderluft die gesamte Fördergutmenge vergrößert wird, ergibt sich eine Steigerung der Fördergeschwindigkeit des Fördergutes im Bereich der Kesselwand. Andererseits wird durch die zusätzlich eingeleitete Luft durch die Förderrohrwandung ein Anhaften von Festgutteilchen an derselben verhindert.

Gemäß einer Weiterbildung der Erfindung ist dafür die Förderleitung mit der Kesselwand durch ein Doppelmantelrohr verbunden, dessen Innenrohr luftdurchlässig ausgebildet ist und dessen Außenrohr mit einem Anschluß für eine Luftzufuhr versehen ist, so daß zusätzliche Luft durch das Innenrohr eingeblasen werden kann. Wird ein derartiges Doppelmantelrohr unmittelbar an die Kesselwand angeschlossen, so besteht die Möglichkeit, unmittelbar an das Doppelmantelrohr eine Förderleitung der vorbekannten Art mit einer elastischen, schlauchförmigen Innenleitung anzuschließen, wobei es sich als vorteilhaft auswirkt, daß durch das Doppelmantelrohr eine Überhitzung der Schlauchleitung verhindert wird und die Fördergeschwindigkeit der Festgutteilchen nach ihrem Austritt aus der schlauchförmigen Leitung wesentlich gesteigert wird, so daß auch insoweit keine Überbeanspruchung der Leitung stattfindet, deren Anwendung zum Zwecke der Verhinderung von Verstopfungen für die Förderung der Additive besonders geeignet ist.

Die vorbeschriebenen Vorteile werden noch gesteigert, wenn der Fördergutstrom durch die Einleitung zusätzlicher Luft in axialer Richtung im Bereich der Kesselwand beschleunigt wird, was insbesondere dadurch ermöglicht wird, daß vor dem Innenrohr des Doppelmantelrohres eine mit einer Luftzufuhr versehene Vorkammer angeordnet wird, welche die Mündung der angeschlossenen Förderleitung mit einem Ringspalt umgibt, aus dem die zusätzlich eingeleitete Luft wie aus einer Ringdüse in den Fördergutstrom im Sinne einer Beschleunigung desselben eingeleitet wird. Weiterhin kann eine Beschleunigung des Fördergutstromes hervorgerufen werden durch eine düsenartige Ausbildung des Innenrohres vom Doppelmantelrohr, in dem dieser an der Austrittseite des Fördergutstromes sich konisch verjüngend ausgebildet wird.

Weitere Merkmale der Erfindung ergeben sich aus den Ansprüchen sowie der nachstehenden Beschreibung von Ausführungsbeispielen der Erfindung, in der auf eine Zeichnung Bezug genommen wird. In dieser Zeichnungen zeigen:

Figur 1: den Anschluß einer Förderleitung an eine Kesselwand mit einem zylindrischen Innenrohr als Düse;

Figur 2: den Anschluß mit einem konisch geformten Innenrohr und unterteilten Luftkammern;

Figur 3: einen Anschluß mit einer Vorkammer vor dem düsenartigen Innenrohr;

Figur 4: einen Anschluß mit Mündungsrohr;

Figur 5: ein Lochblech mit Leitwänden in der Draufsicht;

Figur 6: das Lochblech in der Seitenansicht teilweise im Schnitt;

Figur 7: eine Anordnung wie Figur 4 unter Fortlassung eines Ringspaltes;

Figur 8: eine Anordnung mit einem Schlauchrohr hinter dem gelochten Innenrohr und

Figur 9: eine Anordnung mit zusätzlichem Innenrohr.

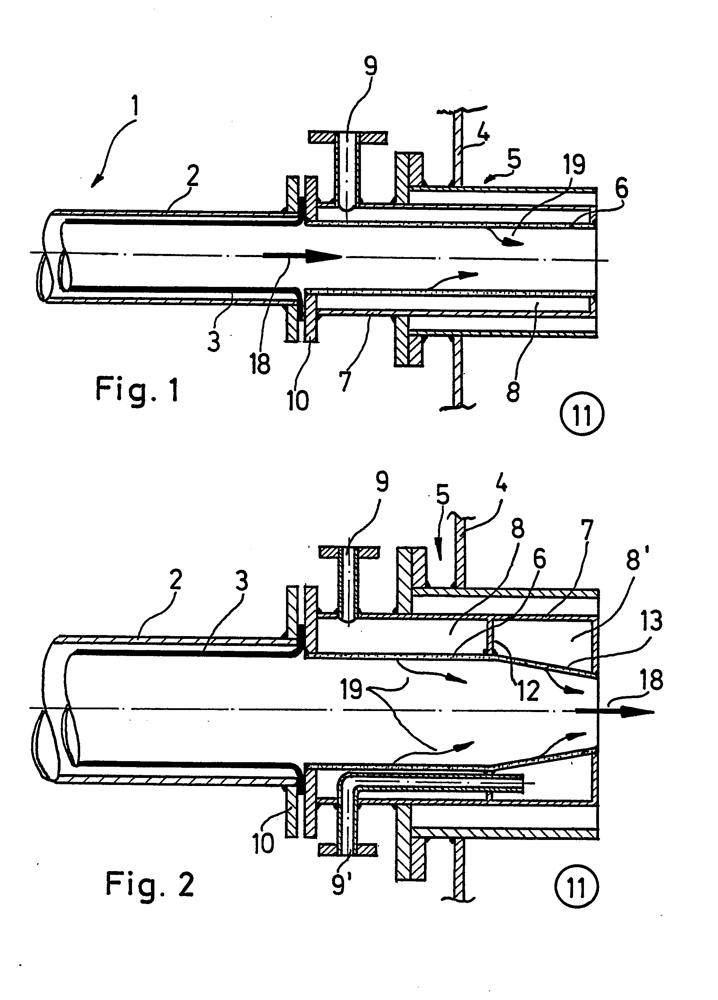

In Figur 1 ist der Anschluß einer Förderleitung 1 an eine Kesselwand 4 unter Verwendung eines Doppelmantelrohres 5 dargestellt, dessen Innenrohr 6 wie auch Außenrohr 7 durchgehend zylindrisch ausgebildet sind.

Die Förderleitung 1 besteht - wie auch bei den beiden weiteren Ausführungsbeispielen - aus einem Rohr 2, in dem ein flexibler Schlauch 3 liegt. Die Förderleitung 1 ist über einen Flansch 10 mit dem Doppelmantelrohr verbunden.

Das Doppelmantelrohr 5 weist ein Innenrohr 6 auf, das aus einem luftdurchlässigen bzw. porösen Material besteht, wie beispielsweise aus Streckmetall oder einem gelochten Edelstahlblech. Innen- und Außenrohr 6 und 7 erstrecken sich durch die Kesselwand 4 hindurch in den Feuerraum 11 hinein. Der Zwischenraum zwischen dem Innen- und Außenrohr 6 bzw. 7 ist über einen Anschlußstutzen 9 mit einer Druckluftquelle verbunden.

Für die Zuführung von Additiven in den Feuerraum 11 zum Zwecke einer Entschwefelung von Rauchgasen wird ein Gemisch aus diesen Additiven mit Luft oder einem anderen Gas aus der Förderleitung 1 bzw. dem Schlauch 3 unter einer Geschwindigkeit in das Innenrohr 6 geleitet, die nicht die Gefahr einer Überbeanspruchung des Schlauches 3 mit sich bringt. Diese Fördergeschwindigkeit wird gesteigert durch die von außen über den Stutzen 9 und die Kammer 8 durch das Innenrohr 6 hindurchgeleitete Luft, welche vom Fördergutstrom entsprechend dem Pfeil 19 abgelenkt wird. Durch die Zuleitung dieser Zusatzluft durch das Innenrohr 6 wirkt dieses im Sinne einer die Fördergeschwindigkeit steigernden Düse. Daneben bringt jedoch der Luftdurchtritt durch das Innenrohr 6 den Vorteil, daß sich auf seiner Innenseite kein Niederschlag an Feststoffteilchen bilden kann bzw. ein "Anbacken" vermieden wird.

Bei der Ausführung nach Figur 2 wird die Einblasgeschwindigkeit der Additive in den Feuerraum 11 hinter der Kesselwand 4 noch dadurch gesteigert, daß das Innenrohr 6 an seinem Austrittsende in der Art einer Düse sich konisch verjüngend ausgebildet ist. Bei dieser Ausführungsform ist der Zwischenraum zwischen dem Außenrohr 7 und dem Innenrohr 6 durch eine Trennwand 12 in zwei Kammern 8 und 8' unterteilt, die jeweils mit einem Anschluß 9 bzw. 9' für eine gesonderte Luftzuführung versehen sind. Dadurch lassen sich den einzelnen Abschnitten des Doppelmantelrohres unterschiedliche Luftmengen zuführen, um dem unterschiedlichen Verhalten verschiedener Additive Rechnung tragen zu können.

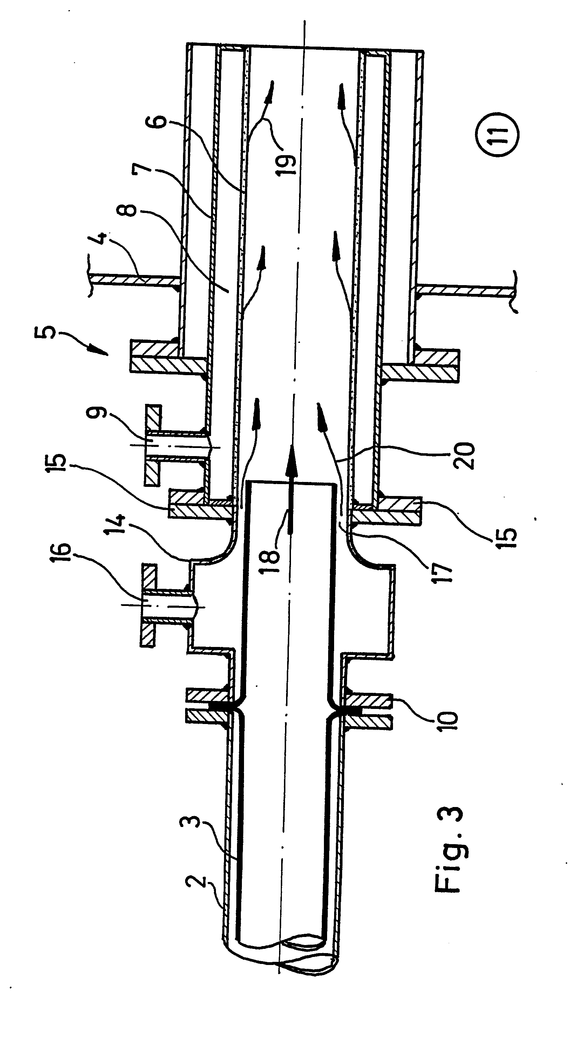

Das Ausführungsbeispiel nach Figur 3 unterscheidet sich von den beiden vorbeschriebenen durch die Anordnung einer Luft-Vorkammer 14 vor dem Innenrohr 6. Diese Vorkammer 14 ist mit einer Luftzufuhr 16 versehen und umgibt das - schlauchförmige Ende der Leitung 3 mit einem Ringspalt 17, durch den zusätzliche Förderluft, entsprechend den Pfeilen 20 wie aus einer Ringdüse austretend den Fördergutstrom entsprechend dem Pfeil 18 im Innenrohr 6 zusätzlich beschleunigt zu der Wirkung, welche die durch das Innenrohr 6 entsprechend den Pfeilen 19 austretende Luft hervorruft. Die Vorkammer 14 ist dafür mit dem Doppelmantelrohr 5 durch einen Flansch 15 verbunden. Gegenüber der Ausführung von Figur 2 hat diejenige von Figur 3 den Vorteil, daß für die Verwirbelung der zusätzlich zugeführten Luft mit dem Fördergutstrom ein verhältnismäßig langer Weg zur Verfügung steht, wobei zu berücksichtigen ist, daß eine zusätzliche Beschleunigung an der Austrittseite des Fördergutstromes noch erreicht werden kann durch eine düsenförmige Gestaltung des Innenrohres entsprechend der Figur 2.

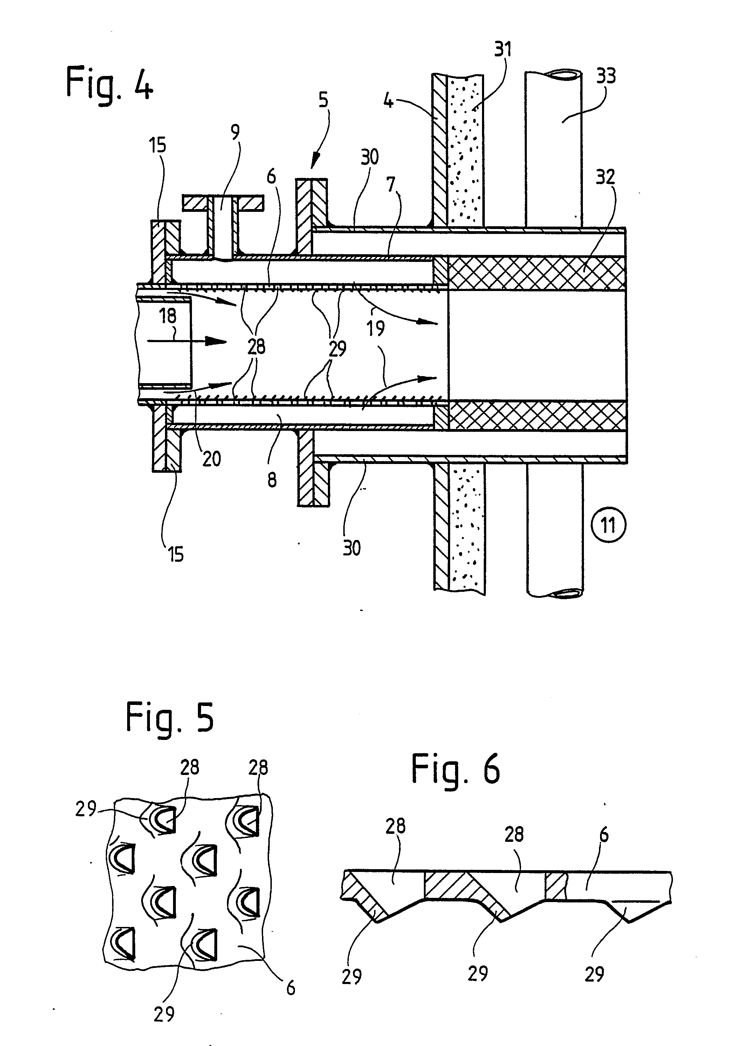

Bei der Ausführung nach Figur 4 besteht das Innenrohr 6 aus einem dünnen Lochblech in der Stärke von 0,3 bis 0,6 mm, bei dem die einzelnen Löcher bzw. Luftdurchtrittsöffnungen 28 teilweise abgedeckt sind durch schräg in das Rohr gerichtete Leitwände 29, die eine Ablenkung des durch das Rohr 6 tretenden Luftstromes in Richtung des Pfeiles 18 der Hauptluftströmung bewirken. Dadurch wird eine Verwirbelung im Randbereich des Rohres 6 unterdrückt bzw. die Förderung des Hauptluftstromes unterstützt. Zur Verwendung kann dafür ein Lochblech bzw. ein Siebblech handelsüblicher Art kommen, wie es im vergrößerten Maßstanb in den Figuren 5 und 6 wiedergegeben ist.

Im übrigen unterscheidet sich die Ausführung nach Figur 4 von den vorbeschriebenen durch die Anordnung eines Mündungsrohres 32 vor dem Innenrohr 6, das sich zusammen mit dem Hüllrohr 30 durch die Kesselwand 4 mit ihrer Wandauskleidung 31 und die Kesselrohre 33 hindurch in den Kesselraum 11 erstreckt. Dieses Mündungsrohr 32 besteht aus einem hitzebeständigen Material von nur geringer Wärmeleitfähigkeit wie beispielsweise aus einem siliziumhaltigen Stahl oder aus Keramik.

Durch das Mündungsrohr 32 wird die thermische Beanspruchung der Anordnung für die Einleitung zusätzlicher Luft insbesondere der Rohre 6 und 7 aber auch eines Schlauches 3 wesentlich vermindert.

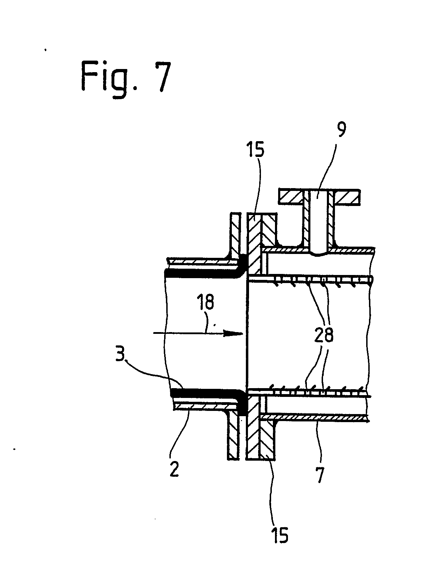

Wird ein gelochtes Innenrohr 6 mit Luftleitwänden 29 angeordnet, welches eine sehr hohe Gasdurchlässigkeit besitzt, so kann entsprechend Figur 7 auf die Anordnung der Ringspaltdüse 17 entsprechend Figur 3 verzichtet werden. Dies ergibt sich daraus, daß das schlauchförmige Innenrohr 3 mit seinem Rand vor dem gelochten Innenrohr 6 verankert wird.

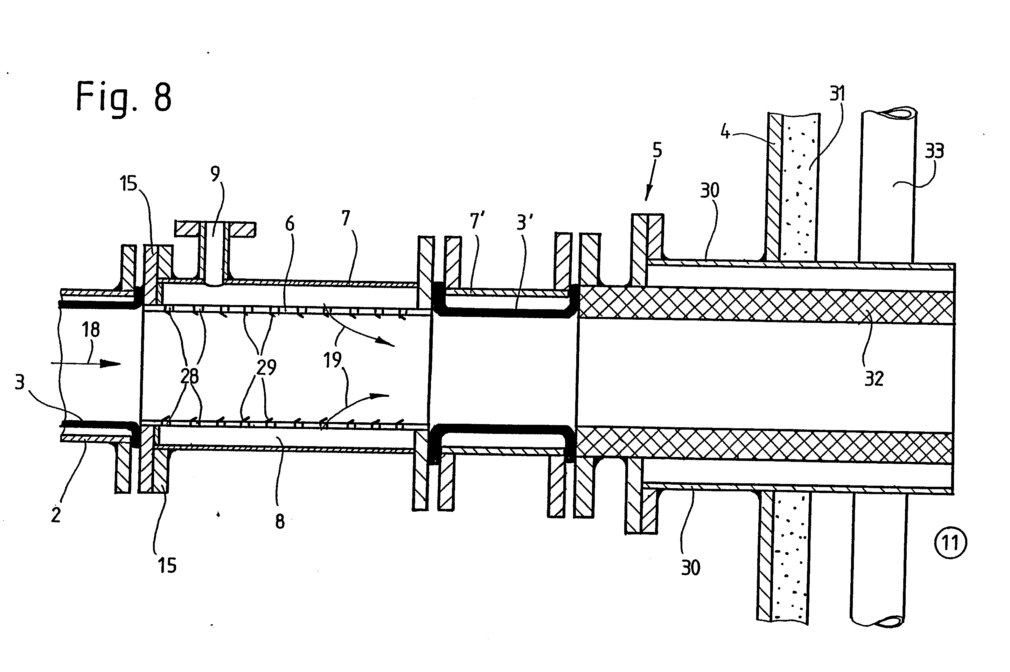

Bei Anordnung eines stark gasdurchlässigen gelochten Innenrohres 6 mit Leitwänden 29 muß andererseits damit gerechnet werden, daß im Bereich des gelochten Innenrohres 6 die Beschleunigung des Fördergutstromes nicht abgeschlossen wird, sondern erst dahinter. Der Bereich bzw. der Rohrabschnitt, in dem die Beschleunigung abgeschlossen wird, ist jedoch in besonderem Maße der Gefahr der Ausbildung von Ankrustungen am Material an der Innenwandung ausgesetzt. Um dem Rechnung zu tragen, ist bei der Ausführung nach Figur 8 vorgesehen, hinter dem gelochten Innenrohr 6 einen verhältnismäßig kurzen Rohrabschnitt anzuordnen, der aus einem elastischen Schlauch 3' besteht, welcher von einem Außenrohr 7' umgeben ist, an den das Mündungsrohr 32 anschließt. Durch einen solchen kurzen Rohrabschnitt aus elastischem Schlauch lassen sich in Folge seiner Bewegungen bzw. Schwingungen Ankrustungen in diesem Bereich verhindern oder vorhandene Ankrustungen zum Abplatzen bringen.

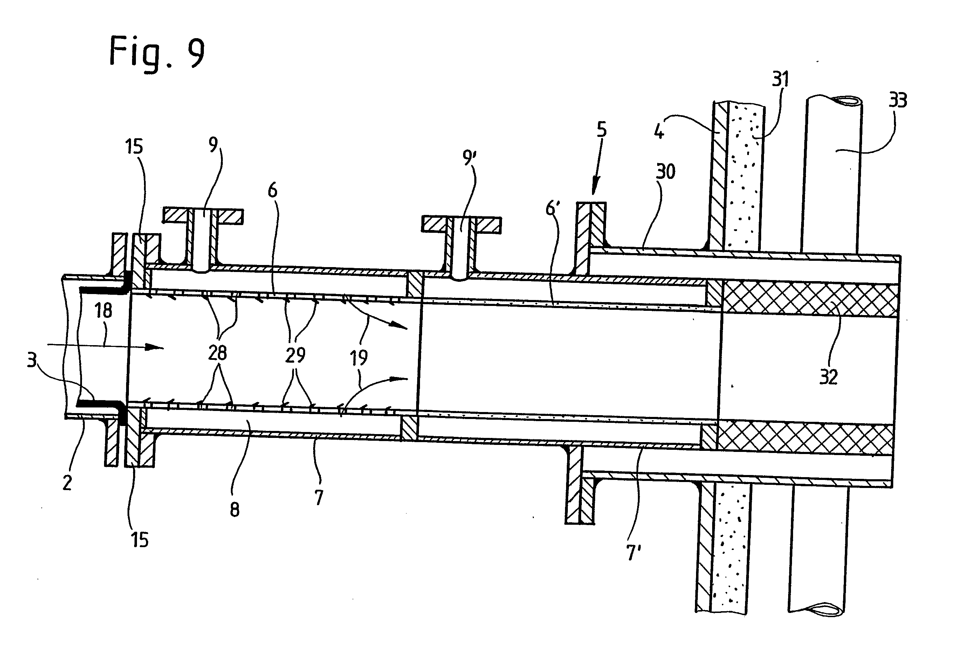

Noch betriebssicherer ist eine Lösung entsprechend der Figur 9, bei welcher anstelle des vorerwähnten Schlauches ein weiteres luftdurchlässiges Innenrohr 6' vorgesehen ist, das jedoch einen wesentlich geringeren Luftdurchgang aufweist, als das vorgeschaltete Lochblech bzw. gelochte Innenrohr 6 und deshalb auch mit einem gesonderten Anschlußstutzen 9' im Außenrohr 7 für die Zuführung von Luft versehen ist. Auch diese Ausführung nach Figur 9 ist also mit anderen Worten besonders geeignet dafür, die im Bereich der abschließenden Beschleunigung sich normalerweise ausbildenden Ankrustungen an der Innenwand des Rohres zu verhindern bzw. wieder zur Ablösung zu bringen. Beim Eintritt des Förderstromes in das Mündungsrohr 32 ist die Beschleunigung abgeschlossen, so daß dieses Mündungsrohr 32 von vornherein von Ansätzen freigehalten bleibt durch die vorgeordneten Installationen.

## Ansprüche

1. Verfahren zum pneumatischen Fördern von feinkörnigen Feststoffen, wie Additiven für eine Entschwefelung von Rauchgasen, in den Feuerraum eines Kessels, dadurch gekennzeichnet, daß im Bereich der Kesselwand Luft durch eine poröse Förderrohrwandung (6) dem Fördergutstrom zugeführt wird.

2. Verfahren nach Anspruch 1, dadurch gekennzeichnet, daß der Fördergutstrom durch die Einleitung von zusätzlicher Luft in axialer Richtung im Bereich der Kesselwand (4) beschleunigt wird.

3. Verfahren nach Anspruch 1 oder 2, dadurch gekennzeichnet, daß der Fördergutstrom durch eine Düse (13) an der Mündung der Förderleitung (6) beschleunigt wird.

4. Anordnung zum pneumatischen Fördern von feinkörnigen Feststoffen mit einer Förderleitung, die an den Feuerraum eines Kessels angeschlossen ist, dadurch gekennzeichnet, daß die Förderleitung (1) mit der Kesselwand (4) durch ein Doppelmantelrohr (5) verbunden ist, dessen Innenrohr (6) luftdurchlässig ausgebildet ist und dessen Außenrohr (7) mit einem Anschluß (9) für eine Luftzufuhr versehen ist.

5. Anordnung nach Anspruch 4, dadurch gekennzeichnet, daß der Zwischenraum (8) zwischen Innen-und Außenrohr (6, 7) durch Trennwände (12) in zwei oder mehrere Kammern (8, 8') unterteilt ist, die jeweils mit einem Anschluß (9, 9') für eine Luftzufuhr versehen sind.

6. Anordnung nach Anspruch 4, dadurch gekennzeichnet, daß das Innenrohr (6) an der Austrittseite des Fördergutstromes sich konisch verjüngend (13) ausgebildet ist.

7. Anordnungnach Anspruch 4, dadurch gekennzeichnet, daß vor dem Innenrohr (6) eine mit einer Luftzufuhr (16) versehene Vorkammer (14) angeordnet ist, welche die Mündung der Förderleitung (1, 3) mit einem Ringspalt (17) umgibt.

8. Anordnung nach Anspruch 4, dadurch gekennzeichnet, daß die Förderleitung (1) aus einem Rohr (2) besteht, in dem ein elastischer Schlauch (3) angeordnet ist.

9. Anordnung nach Anspruch 8, dadurch gekennzeichnet, daß das Ende des elastischen Schlauches (3) an der Eingangsseite des Doppelmantelrohres (5) verankert ist.

10. Anordnung nach Anspruch 4, dadurch gekennzeichnet, daß das Innen-und Außenrohr (6, 7) des Doppelmantelrohres (5) zylindrisch ausgebildet ist (Figur 3).

11. Anordnung nach Anspruch 4, dadurch gekennzeichnet, daß das gelochte Innenrohr (6) Luftleitwände (29) aufweist, welche die durch die Löcher (28) durchtretende Luft in die Hauptstromrichtung (18) umlenken.

12. Anordnung nach Anspruch 11, dadurch gekennzeichnet, daß sich die Luftleitwände (29) in das Innenrohr (6) erstrecken.

13. Anordnung nach Anspruch 11, dadurch gekennzeichnet, daß das Innenrohr (6) aus einem Lochblech in der Stärke von 0,3 bis 0,6 mm besteht.

14. Anordnung nach Anspruch 4, dadurch gekennzeichnet, daß vor dem Innenrohr (6) ein Mündungsrohr (32) aus einem hitzebeständigen Material von geringer Wärmeleitfähigkeit wie aus Keramik angeordnet ist, das sich in den Feuerraum (11) erstreckt.

15. Anordnung nach Anspruch 14, dadurch gekennzeichnet, daß sich das Mündungsrohr (32) durch die Kesselwand (4) und Kesselrohre (33) erstreckt.

16. Anordnung nach Anspruch 14, dadurch gekennzeichnet, daß zwischen dem gelochten Innenrohr (6) und dem Mündungsrohr (32) ein Innenrohr (3') angeordnet ist, das aus einem elastischen Schlauch besteht.

17. Anordnung nach Anspruch 14, dadurch gekennzeichnet, daß zwischen dem gelochten Innenrohr (6) und dem Mündungsrohr (32) ein weiteres luftdurchlässiges Innenrohr (6') mit einem Anschlußstutzen (9') für die Luftzufuhr durch das Außenrohr (7') vorgesehen ist.

Fig. 1

Fig. 2

Fig. 3

0 268 059

# Fig. 4

# Fig. 5

# Fig. 6

# Fig. 7

Fig. 8

Fig. 9

0 268 059

| | **EINSCHLÄGIGE DOKUMENTE** | | EP 87114643.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| Y | US - A - 4 639 290 (GRETHE)<br>  * Fig. 5 *<br>  -- | 1,4,10 | F 23 J 7/00<br>B 65 G 53/18 |
| Y<br>A | US - A - 4 116 491 (PLY)<br>  * Fig. 3 *<br>  -- | 1,4,10<br>5 | |
| A | VERFAHRENSTECHNIK, 12. Jahrgang, Nr. 4, April 1978, Krausskopf-Verlag für Wirtschaft GmbH, Lessingstraße 12, Mainz<br><br>W.KRAMBROCK "Möglichkeiten zum Verhindern der Stopfenbildung beim pneumatischen Transport"<br>Seiten 190-202<br><br>  * Seite 196, Spalte 3, Zeile 24 - Seite 200, Spalte 1, Zeile 6; Fig. 9b,d *<br><br>  -- | 1,4 | |
| A | US - A - 1 307 365 (KINYON)<br>  -- | • | RECHERCHIERTE SACHGEBIETE (Int Cl 4)<br><br>F 23 J 7/00<br>F 23 K 3/00<br>B 65 G 53/00 |
| D,A | DE - C3 - 2 600 546 (BÜHLER-MIAG)<br>  * Gesamt *<br><br>  -- | 8 | |
| D,A | DE - B - 1 265 041 (E.I. DU PONT DE NEMOURS)<br>  * Gesamt *<br><br>  ---- | 8 | |

Der vorliegende Recherchenbericht wurde für alle Patentansprüche erstellt.

| Recherchenort | Abschlußdatum der Recherche | Prüfer |
|---|---|---|
| WIEN | 29-02-1988 | TSCHÖLLITSCH |